# DEMANDE DE BREVET EUROPEEN

(11) **EP 0 766 280 A2**
(43) Date de publication de la demande: **02.04.1997**
(21) Numéro de dépôt: 96402018.4
(22) Date de dépôt: 24.09.1996
(51) Int. Cl.: H01H 73/00, H01H 71/56

(54) **Dispositif de commande et de signalisation pour appareil interrupteur de protection**

(30) Priorité: 28.09.1995 FR 9511545
(71) Demandeur: SCHNEIDER ELECTRIC SA, 92100 Boulogne Billancourt (FR)
(72) Inventeur: Duchemin, Pierre, 78112 Fourqueux (FR)
(74) Mandataire: Saint Martin, René

(57) **Abrégé**

La présente invention se rapporte à un dispositif de commande et de signalisation pour un appareil interrupteur de protection de type contacteur-disjoncteur pourvu d'interrupteurs de puissance (1) et d'un ensemble de protection (4) susceptible de déceler les défauts (surcharges ou surintensités) sur chaque chemin de courant associé à un interrupteur (1), ce dispositif étant manoeuvré par un organe de commande manuelle (51) susceptible d'occuper une position de marche correspondant aux interrupteurs fermés, une position "arrêt" correspondant aux interrupteurs ouverts et une position "déclenché" correspondant à la position après défaut, caractérisé par le fait qu'il comporte un poussoir de déclenchement mobile (52) soumis à l'action d'un ressort de déclenchement (54) et susceptible de venir, à partir d'une position de "marche" où il est verrouillé par un verrou automatique (55), actionner, après déclenchement et libération par le verrou (55), l'organe de commande manuelle (51), lequel actionne alors l'interrupteur bobine (81).

## Description

La présente invention se rapporte à un dispositif de commande et de signalisation pour un appareillage interrupteur de protection notamment un contacteur-disjoncteur pourvu d'un ensemble de protection susceptible de déceler les défauts (surcharges ou surintensités) sur chaque chemin de courant associé à un pôle de puissance, ce dispositif étant manoeuvré par un organe de commande manuelle susceptible d'occuper une position de marche correspondant aux interrupteurs fermés, une position "arrêt" correspondant aux interrupteurs ouverts et une position "déclenché" correspondant à la position après défaut.

On trouve, sur les disjoncteurs moteurs ou les contacteurs-disjoncteurs, des dispositifs de commande et de signalisation encore appelés "serrures".

Un disjoncteur-moteur ou démarreur manuel permet de commander les pôles à partir d'une commande manuelle ou à partir d'un ensemble de déclenchement thermique et magnétique assurant une fonction de protection. Lorsqu'un défaut électrique est décelé sur une des phases, le déclencheur thermique et magnétique de la phase correspondante déclenche l'ouverture des pôles par le biais d'une serrure commune. Celle-ci peut par ailleurs être actionnée manuellement par un bouton de commande manuelle.

Un contacteur-disjoncteur combine un contacteur et un disjoncteur. Il comprend un ensemble de déclenchement magnétique et/ou thermique et un électroaimant qui commande les pôles de manière à assurer la fonction contacteur. Le disjoncteur-moteur ou démarreur manuel dont on a parlé plus haut comprend, pour déplacer les contacts, des moyens similaires, mais pas d'électroaimant.

Une serrure de contacteur-disjoncteur permet de commander la marche, l'arrêt, le déclenchement, le réarmement et assurer également la visualisation de l'état des contacts, ceci par la position du bouton de commande manuelle de cette serrure.

De nombreuses serrures existent mais elles sont souvent très compliquées, coûteuses, encombrantes, d'un fonctionnement complexe et délicat.

La présente invention a pour but de fournir un dispositif de commande et de signalisation simple, fiable, silencieux et peu coûteux. Il génère peu de frottements et ne nécessite pas, pour être manoeuvré, de gros efforts de la part de l'opérateur. Il a un fonctionnement doux quelle que soit la taille ou la puissance de l'appareil. Il peut être monté directement sur l'appareil ou être déporté de celui-ci. Par ailleurs, il peut être employé sur des appareils de calibres différents.

Le dispositif selon l'invention est caractérisé par le fait qu'il comporte un poussoir de déclenchement mobile soumis à l'action d'un ressort de déclenchement et susceptible de venir, à partir d'une position de "marche" où il est verrouillé par un verrou automatique, actionner, après déclenchement et libération par le verrou, l'organe de commande manuelle, lequel actionne alors l'interrupteur bobine.

Selon une caractéristique, le poussoir et l'organe de commande manuelle sont soumis à un ressort à bascule.

L'invention va maintenant être décrite avec plus de détail en se référant à des modes de réalisation donnés à titre d'exemples et représentés par les dessins annexés sur lesquels:
- la figure 1 est un schéma de contacteur-disjoncteur équipé du dispositif de commande et signalisation selon l'invention;
- la figure 2 est une coupe selon ll-ll de la figure 1;
- la figure 3 est une vue en coupe selon III-III du dispositif;
- la figure 4 est une coupe axiale selon IV-IV de la figure 2;
- les figures 5 et 6 représentent le dispositif selon l'invention en position "Arrêt", (respectivement bouton enlevé et avec le bouton);
- les figures 7 et 8 représentent le dispositif en position "Marche";
- les figures 9 et 10 représentent le dispositif en position "Déclenché";
- les figures 11 , 12, 13 représentent une variante du dispositif, respectivement en position "Arrêt", "Marche", "Déclenché" ;
- la figure 14 représente un dispositif monté déporté par rapport à l'appareil auquel il est associé.

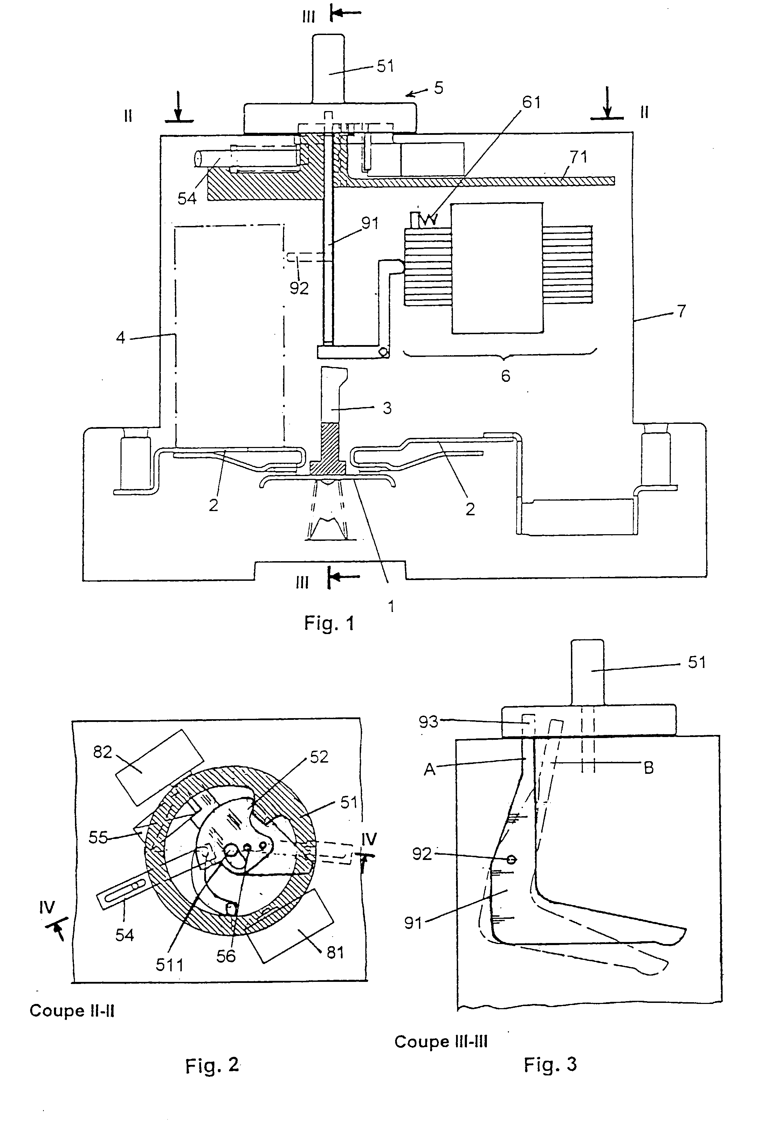

Le dispositif de commande et signalisation selon l'invention, repéré 5, est destiné à équiper un appareillage interrupteur de protection tel que celui qui est illustré à la figure 1. Cet appareillage est du type contacteur-disjoncteur et il comporte plusieurs pôles de puissance aptes à couper le courant sur des chemins de courant se terminant par des bornes de raccordement servant au branchement de conducteurs électriques. Un seul pôle, de type à double coupure, est représenté sur la figure 1 de manière à simplifier les dessins.

Chaque pôle comprend un pont de contacts mobiles 1 qui coopère avec des contacts fixes pour établir ou interrompre le passage du courant entre les bornes de raccordement. Les contacts fixes sont reliés par des conducteurs 2 aux bornes de raccordement sur lesquelles on branche les conducteurs extérieurs.

Un ensemble porte-contacts 3 qui porte les ponts de contacts 1 coulisse dans le boîtier 7, perpendiculairement au plan passant par les contacts fixes.

Un électroaimant 6 qui est logé dans le boîtier comprend un circuit magnétique fixe, un circuit magnétique mobile relié mécaniquement au porte-contacts 3 et une bobine dont les bornes sont reliées à une source d'alimentation, l'alimentation de la bobine étant contrôlée par un interrupteur de bobine 81. Le circuit mobile de l'électroaimant est soumis à un ressort de rappel 61 qui, en cas d'arrêt de l'excitation de la bobine, le déplace ainsi que le porte-contacts 3 jusqu'à la position d'ouverture (contacts ouverts).

Un ensemble de protection 4 est incorporé à l'appareil de manière à déceler les surcharges ou surintensités sur chaque chemin de courant associé à un pôle. Lorsque cet ensemble de protection 4 décèle une surintensité ou une surcharge sur un chemin de courant, il commande, par l'intermédiaire du dispositif 5, l'ouverture des pôles. Cet ensemble de protection 4 est du type magnétique et/ou thermique ou encore du type électronique.

Le dispositif 5 qui est représenté en détail sur les figures 2 à 10, comporte, outre l'organe de commande manuelle 51, un poussoir de déclenchement mobile 52.

L'organe de commande manuelle 51 est mobile entre trois positions principales : "marche" ou "ON" (contacts fermés), "arrêt" ou "OFF" (contacts ouverts), "déclenché" ou "TRIP" (contacts ouverts sur défaut).

Le dispositif comporte des interrupteurs (ou contacts) 81 et 82. L'interrupteur 81 est le contact bobine. Dans le mode de réalisation des figures 2 à 10, l'interrupteur 82 est un contact de signalisation. A titre indicatif, les interrupteurs 81 et 82 peuvent être constitués par des micro-rupteurs.

Le poussoir de déclenchement 52 est soumis d'une part à un ressort de bascule 53 prenant appui sur l'organe de manoeuvre 51 et d'autre part à un ressort 54 de déclenchement prenant appui sur la platine de serrure 71.

Une extrémité du ressort à bascule 53 est accouplée en 531 au poussoir de déclenchement 52, tandis que l'autre extrémité est accouplée en 532 à l'organe de commande manuelle 51.

Une extrémité du ressort de déclenchement 54 est accouplée en 541 au poussoir de déclenchement 52, tandis que l'autre extrémité est accouplée en 542 à la platine 71.

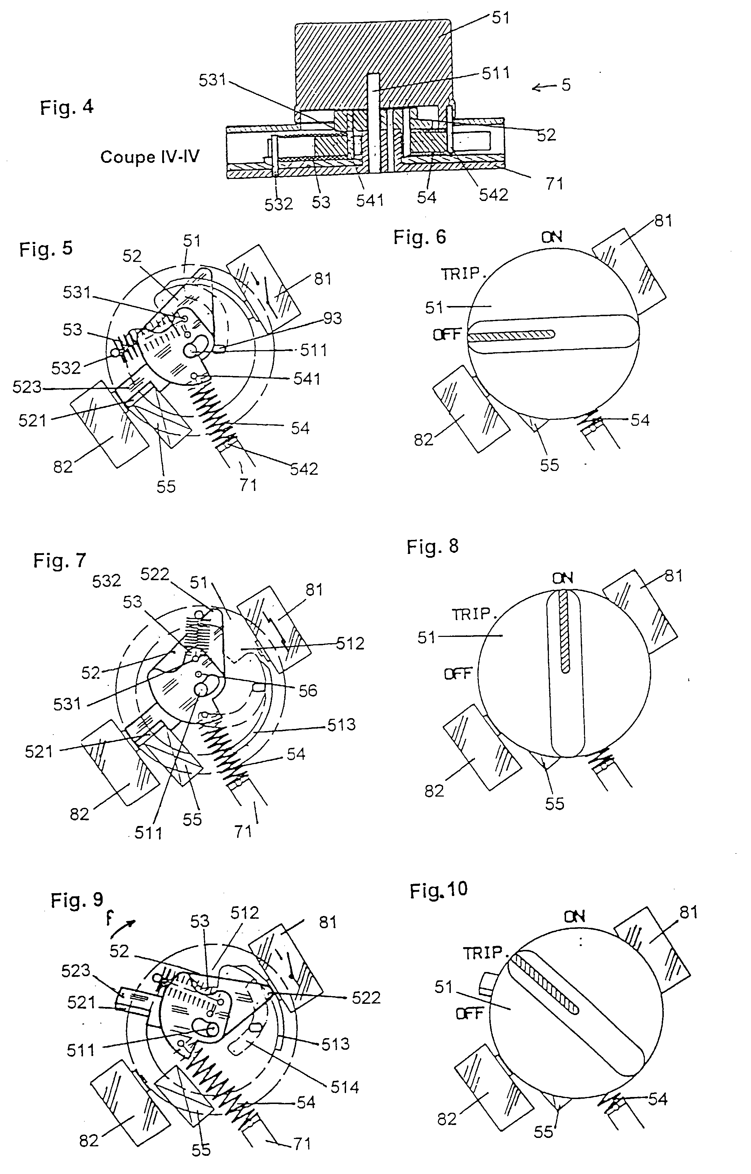

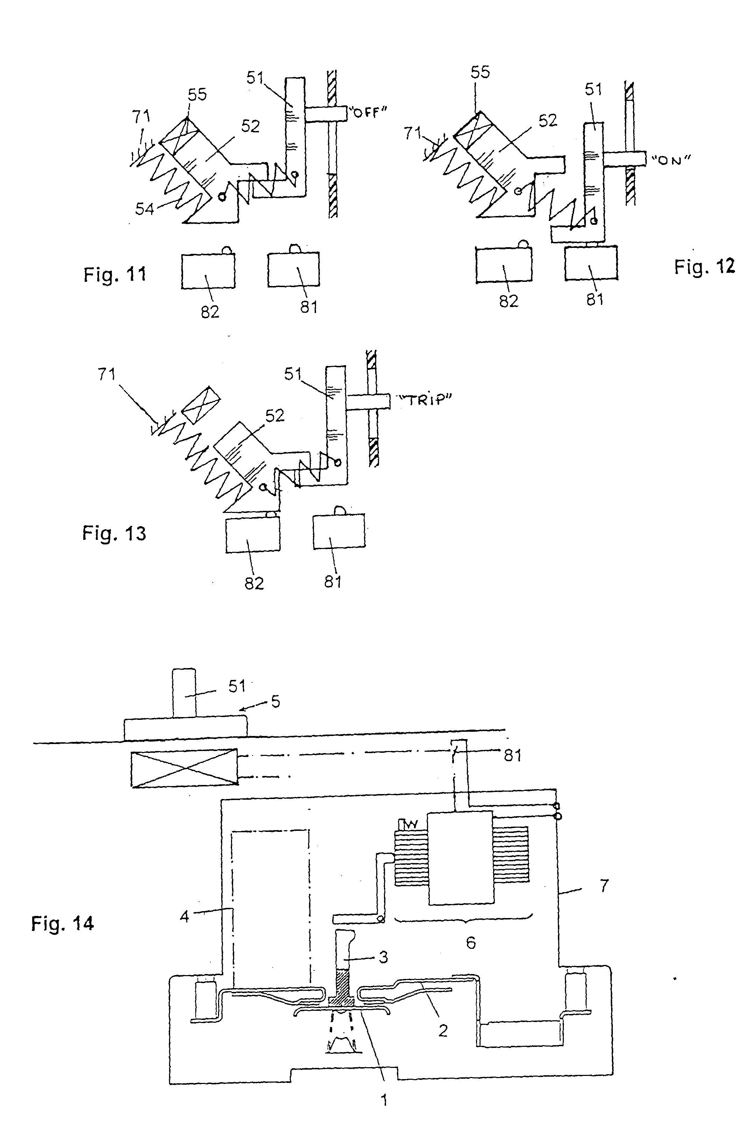

Le poussoir de déclenchement 52 coopère avec un verrou automatique 55 qui peut l'immobiliser en position d'armement (position "marche" des figures 7 et 8 ou position "arrêt" des figures 5 et 6) ou le libérer (lorsque ce verrou est actionné par l'ensemble de protection 4) de manière qu'il vienne occuper la position "déclenchée" des figures 9 et 10. Ce verrou 55 est donc capable d'immobiliser le poussoir de déclenchement 52, par son bec 523, en position d'armement (figures 5 à 8) correspondant soit à la position "marche" soit à la position "arrêt", ces positions "marche" ou "arrêt" étant signalées par l'organe de commande 51.

A titre d'exemple, le verrou automatique 5 est de type électromagnétique et il est alors constitué d'un aimant permanent associé à une bobine de déverrouillage. Le poussoir de déclenchement 52 est pourvu d'une partie en matériau magnétique 521 (adjacente à 523) qui est susceptible d'être attirée par l'aimant permanent du verrou 5. Au moment du déverrouillage, le champ magnétique de l'aimant permanent sera annulé par le champ électromagnétique de la bobine de déverrouillage.

En variante, le verrou automatique 5 pourrait être constitué par un crochet déverrouillable électriquement.

Dans le mode de réalisation des figures 2 à 10, l'organe de commande 51 est un bouton monté rotatif autour d'un axe 511, sur la platine 71, de manière à pivoter entre les trois positions principales: "marche" ou "ON" (contacts fermés), "arrêt" ou "OFF" (contacts ouverts), "déclenché" ou "TRIP" (contacts ouverts sur défaut).

Le poussoir de déclenchement 52 est monté pivotant autour d'un axe 56 sur la platine 71. L'axe de pivotement 56 du poussoir 52 est parallèle à l'axe 511 et situé à proximité de celui-ci. En variante, l'axe de pivotement 56 du poussoir pourrait être confondu avec l'axe 511 de pivotement du bouton 51.

Le poussoir de déclenchement 52 actionne l'interrupteur 82 par l'intermédiaire de son bec 522.

Pour la position "OFF" (figure 5), le bouton 51, par l'intermédiaire de sa came 513, agit sur l'interrupteur de bobine 81 qui est alors ouvert. Pour la position "ON", le bouton et sa came 513 n'agissent plus sur l'interrupteur 81 qui est fermé (figure 7).

Lorsque le poussoir 52 est en position "armée" (position "ON" ou "OFF") (figure 5 et 7), il agit sur l'interrupteur de signalisation 82. Dès que le poussoir de déclenchement 52 se déplace vers la position "déclenché" c'est à dire en cas de défaut détecté par l'ensemble de protection 4, il cesse d'agir sur l'interrupteur de signalisation 82.

L'organe de commande 51 présente une butée 512 qui peut venir en contact avec le poussoir 52 de manière à faire pivoter celui-ci dès qu'un opérateur tourne l'organe de commande 51.

Il est possible de réaliser une action forcée sur les contacts de puissance en ajoutant un mécanisme complémentaire. Ce mécanisme comporte un levier basculant 91 qui est manoeuvré par le bouton 51 et qui agit sur le pont de contacts 3. Le levier 91 peut pivoter autour d'un axe 92. L'extrémité 93 du levier est guidée dans une rampe 514 du bouton 51 de manière que, suivant la position du bouton, le levier déplace ou non le pont de contacts 3 (positions A ou B).

Le fonctionnement du dispositif des figures 2 à 10 va maintenant être expliqué en se référant aux dessins.

Dans la position "Arrêt" illustrée par les figures 5 et 6, le poussoir de déclenchement 52 est verrouillé en position d'armement par le verrou automatique 55. Le ressort de déclenchement 54 est comprimé. L'interrupteur bobine 81 est ouvert.

Pour passer de "Arrêt" (figures 5 et 6) à "Marche" (figures 7 et 8), l'opérateur fait tourner le bouton de commande 51 de "Arrêt" (ou "OFF") à "Marche" (ou "ON"). Le poussoir 52 reste immobilisé en rotation par le verrou 55. Pendant ce mouvement de rotation du bouton 51, l'axe du ressort 53 bascule d'un côté à l'autre de la ligne d'action 532--56. En fin de course, le bouton 51 déclenche la fermeture de l'interrupteur bobine 81 (la rampe 513 se dégage du poussoir de l'interrupteur). L'électroaimant 6 est alors alimenté et le porte-contacts 3 se déplace dans le sens de la fermeture des pôles.

Pour passer de "marche" à "arrêt", le fonctionnement est inverse.

En cas de défaut (surcharge ou court-circuit), un ordre de déclenchement venant de l'ensemble de protection 4 est envoyé, via une liaison électrique, au verrou électromagnétique 55. Celui-ci libère le poussoir de déclenchement 52 qui, sous l'effort du ressort 54, commence à pivoter (sens f) vers la position "déclenchée" illustrée par les figures 9 et 10. Le ressort à bascule 53 se comprime pendant cette première phase. A un certain moment, l'axe du ressort 53 dépasse la ligne d'axes 532-56. Le ressort 53 par son mouvement de bascule fait pivoter le bouton 51 par rapport au poussoir 52, en sens inverse du sens de rotation f de ce poussoir 52. Le bouton 51 passe de la position "Marche" à la position "Déclenchée" illustrée aux figures 9 et 10. Pendant son pivotement, le bouton 51 ouvre l'interrupteur 81 (par la came 513) qui coupe l'alimentation bobine. Simultanément le bec 522 du poussoir 52 ouvre cet interrupteur 81. De ce fait l'électroaimant 6 s'ouvre et les pôles s'ouvrent.

On notera que la rotation du poussoir 52 manoeuvre l'interrupteur de signalisation 82.

Le mouvement de pivotement du bouton 51 par rapport au poussoir 52 est finalement stoppé par la butée 512. Le ressort 53 agit à la fin dans le même sens que le ressort 54, sur le poussoir 52.

Pour passer de la position "Déclenché" ( figures 9 et 10) à la position "Arrêt", (figures 5 et 6), l'opérateur fait pivoter, dans le sens inverse à f, le bouton 51 qui entraîne par sa butée 512 le poussoir 52. Celui-ci revient vers la position "armement" représentée aux figures 5 et 6. En fin de course le verrou automatique 55 verrouille le poussoir de déclenchement 52 en position "armement", le bouton 51 étant lui en position "arrêt".

Pour passer de la position "Déclenché" à la position "Marche", l'opérateur effectue la manoeuvre décrite précédemment et fait en plus pivoter le bouton 51 jusqu'à la position "marche".

Si l'opérateur maintient le bouton 51 en position "marche", lors d'un court-circuit, le poussoir 52 par l'intermédiaire de son bec 522 déclenchera et ouvrira l'interrupteur 81 (voir figure 9).

Le dispositif des figures 11 à 14 se distingue de celui des figures 2 à 10 par le fait que les mouvements du poussoir 52 et de l'organe de commande 51 sont linéaires alors que les mouvements des mêmes composants dans le dispositif des figures 2 à 10 sont rotatifs. Le fonctionnement est néanmoins similaire au fonctionnement du dispositif rotatif.

On voit, sur la figure 15, un montage dans lequel le dispositif 5 est déporté de l'appareil 7 logeant l'électroaimant, les interrupteurs et l'ensemble de protection. Le dispositif peut être par exemple monté sur la porte d'une armoire, l'appareil étant monté sur le fond de l'armoire.

Il est bien entendu que l'on peut sans sortir du cadre de l'invention imaginer des variantes et des perfectionnements de détail et de même envisager l'emploi de moyens équivalents.

En variante, un second interrupteur peut être associé au premier interrupteur bobine, les deux interrupteurs étant en série sur l'alimentation bobine. Ce second interrupteur est manoeuvré par le bec 522 du poussoir 52 après déclenchement.

En variante, le dispositif peut comporter un ressort de traction au lieu d'un ressort de compression 53.

## Revendications

1. Dispositif de commande et de signalisation pour un appareil interrupteur de protection notamment de type contacteur-disjoncteur pourvu d'un ensemble de protection (4) susceptible de déceler les défauts sur chaque chemin de courant associé à un pôle de puissance (1) et d'un interrupteur (81) servant à contrôler l'alimentation bobine, ce dispositif étant manoeuvré par un organe de commande manuelle (51) susceptible d'occuper une position de marche correspondant aux interrupteurs fermés, une position "arrêt" correspondant aux interrupteurs ouverts et une position "déclenché" correspondant à la position après défaut, caractérisé par le fait qu'il comporte un poussoir de déclenchement mobile (52) soumis à l'action d'un ressort de déclenchement (54) et susceptible de venir, à partir d'une position de "marche" où il est verrouillé par un verrou automatique (55), actionner, après déclenchement et libération par le verrou (55), l'organe de commande manuelle (51), lequel actionne alors l'interrupteur bobine (81).

2. Dispositif selon la revendication 1, caractérisé par le fait que le poussoir (52) et l'organe de commande manuelle (51) sont soumis à un ressort à bascule (53).

3. Dispositif selon l'une quelconque des revendications précédentes, caractérisé par le fait qu'une extrémité du ressort à bascule (53) est accouplée au poussoir de déclenchement (52), tandis que l'autre extrémité de ce ressort est accouplée en (532) au bouton (51).

4. Dispositif selon l'une quelconque des revendications précédentes, caractérisé par le fait qu'une extrémité du ressort de déclenchement (54) est accouplée au poussoir de déclenchement (52), tandis que la seconde extrémité est accouplée à la platine (9) du dispositif.

5. Dispositif selon l'une quelconque des revendications précédentes, caractérisé par le fait qu'il comporte un second interrupteur servant soit à la signalisation soit de contact bobine.

6. Dispositif selon l'une quelconque des revendications précédentes, caractérisé par le fait que le verrou automatique (52) est de type électromagnétique et est constitué par un aimant permanent associé à une bobine de déverrouillage.

7. Dispositif selon l'une quelconque des revendications précédentes, caractérisé par le fait que l'organe de commande (51) est un bouton monté rotatif autour d'un axe (511) sur la platine (9), de manière à pivoter entre la position de "marche, la position "arrêt" et la position "déclenché.

8. Dispositif selon l'une quelconque des revendications précédentes, caractérisé par le fait que le poussoir de déclenchement (52) est monté pivotant autour d'un axe (56) sur la platine (9).

9. Dispositif selon l'une quelconque des revendications précédentes, caractérisé par le fait que le bouton (51) est pourvu d'une came (513) apte à actionner l'interrupteur bobine (81).

10. Dispositif selon l'une quelconque des revendications précédentes, caractérisé par le fait que le poussoir de déclenchement (52) est pourvu d'un bec (522) servant à actionner l'interrupteur bobine (81) et d'un second bec (523) servant à actionner l'interrupteur de signalisation (82).

11. Dispositif selon l'une quelconque des revendications précédentes, caractérisé par le fait que le bouton (51) est pourvu d'une butée (512) apte à faire pivoter le poussoir (52).

12. Dispositif selon l'une quelconque des revendications précédentes, caractérisé par le fait qu'il est déporté de l'appareil (7) logeant l'électroaimant, les interrupteurs et l'ensemble de protection.
